# FASCICULE DE BREVET EUROPEEN

(11) **EP 0 481 896 B1**
(45) Date de publication et mention de la délivrance du brevet: **10.04.1996**
(21) Numéro de dépôt: 91402776.8
(22) Date de dépôt: 17.10.1991
(51) Int. Cl.: G06F 13/12

(54) **Contrôleur de communication entre un ordinateur et une pluralité de terminaux, appartenant à un réseau de type CSMA/CD**
Übertragungssteuerung zwischen einem Rechner und einer Mehrzahl von Datenendgeräten in einem Netzwerk vom CSMA/CD-Typ
Communication controller between a computer and a plurality of terminals belonging to a network of the CSMA/CD type

(30) Priorité: 17.10.1990 FR 9012826
(43) Date de publication de la demande: 22.04.1992
(73) Titulaire: BULL S.A., F-92800 Puteaux (FR)
(72) Inventeur: Le Gallo, Rémy, F-78150 Le Chesnay (FR); Gauthier, Bernard, F-78360 Montesson (FR); Lebreton, Marc, F-78560 Le-Port-Marly (FR)
(74) Mandataire: Gouesmel, Daniel

(56) Documents cités:
- EP-A- 0 226 975
- IEEE INFOCOM '88 THE CONFERENCE ON COMPUTER COMMUNICATIONS, PROC. OF THE 7TH ANNUAL JOINT CONFERENCE OF THE IEEE COMPUTER AND COMMUNICATIONS SOCIETIES 27 Mars 1988, New Orleans, US, pp. 1072-1081; M. STREETHARAN et al.: 'Architecture of a multiprocessor-based high speed communications processor'
- WESCON TECHNICAL PAPERS 30 Octobre 1984, Anaheim, US, pp. 1-8; G. RAUH et al.: 'Generalized data transfer engine for CSMA and token local area networks'
- MINI-MICRO CONFERENCE RECORD Mai 1984, New York, US, pp. 1-10; B. SEGAL: 'MK68590 - MK3891 silicon solutions for local area networks'

## Description

La présente invention concerne un contrôleur de communication entre un ordinateur et une pluralité de terminaux, appartenant à un réseau local de type à méthode d'accès à test de porteuse et détection de collision. Ce type de réseau est plus fréquemment désigné par son sigle anglo-saxon CSMA/CD. L'invention est plus particulièrement applicable aux réseaux locaux de type ETHERNET, CHEAPERNET, ou encore STARLAN.

Les réseaux de transmission de données, encore appelés réseaux de télécommunications ou réseaux de communications, sont constitués par une pluralité d'unités, généralement appelées "équipement terminal de traitement de données", en abrégé, ETTD (Data Terminal Equipment, en langue anglaise, en abrégé, DTE). Elles sont encore appelées terminaux ou stations par commodité de langage. Un ordinateur relié à un tel réseau est considéré comme un terminal. Les terminaux communiquent entre eux par l'intermédiaire d'un support de transmission qui est constitué, par exemple, par deux paires de fils téléphoniques (l'une pour l'émission, l'autre pour la réception), ou encore un câble coaxial.

Les différents terminaux d'un réseau émettent des messages d'information et reçoivent ceux émis par les autres. Un message est constitué par un ensemble de blocs élémentaires d'informations comprenant un nombre déterminé d'informations binaires. Ces blocs sont encore appelés trames (frame, en langue anglaise). Chaque trame est structurée et comporte des informations définissant le début et la fin de celle-ci, l'adresse du terminal auquel est destiné le message, l'adresse du terminal émetteur, la longueur des données, les données utiles, etc..

Les réseaux locaux (local area network, en langue anglaise, en abrégé LAN) sont des réseaux limités à un emplacement géographique de surface restreinte, où les distances entre les différentes stations varient de quelques mètres ou dizaines de mètres à quelques kilomètres.

Les réseaux locaux de type CSMA/CD sont d'un usage fréquent dans la pratique courante. Ils ont été normalisés par le Comité IEEE de l'Institute of Electrical and Electronic Engineers, sous la forme d'une norme dite 802.3 (reprise par l'I.S.O., Organisation Internationale de Normalisation, sous la forme de la norme ISO 8 802.3), dont les dispositions essentielles sont les suivantes :
- un ETTD en tant qu'émetteur de données est, soit silencieux, soit en train d'émettre des données,
- un ETTD, lorsqu'il est silencieux, peut, en tant que récepteur, soit détecter un silence, soit recevoir des données provenant d'un ou plusieurs autres ETTD. Si les données reçues proviennent simultanément de plusieurs d'entre eux, la valeur de celles-ci est sans signification, ce qui est le cas lorsqu'on est en présence d'une collision. (Pour une station déterminée, on rappelle qu'une collision est définie par la présence simultanée du propre signal d'émission de la station et d'un signal émis par une autre).
- un ETTD qui est en train d'émettre peut, en tant que récepteur, soit détecter que son émission se déroule normalement (sans collision), soit qu'une collision a lieu.

La norme précitée définit également le format des trames et le protocole régissant le dialogue entre les différentes stations. Ce protocole définit les règles d'accès à celles-ci.

Dans la pratique courante actuelle, parmi les réseaux locaux de type CSMA/CD, on connaît notamment, d'une part les réseaux locaux de type ETHERNET ou CHEAPERNET pour lesquels le débit de transmission des données est de 10 Mbits/s, et d'autre part les réseaux locaux de type STARLAN, pour lesquels le débit de transmission des données est de 1 Mbit/s.

Pour les réseaux locaux de type ETHERNET ou CHEAPERNET, le support de transmission normalisé est un câble coaxial d'impédance caractéristique 50 Ohms. En ce qui concerne les réseaux de type STARLAN, le support de transmission normalisé est constitué par deux paires de fils téléphoniques.

On sait qu'un ordinateur est constitué d'une part, d'un ou de plusieurs processeurs centraux, de processeurs d'entrée/sortie, de mémoires vives et mémoires mortes associées à l'ensemble de ces processeurs, de contrôleurs d'entrée/sortie, d'autre part de différents organes phériphériques tels que des mémoires à disques ou périphériques d'entrée/sortie permettant l'échange de données avec l'extérieur (terminaux à écran, imprimantes, etc..), ces organes périphériques étant associés à des contrôleurs de périphériques.

L'ensemble des éléments constitutifs précités (en dehors des périphériques) est disposé sur un ensemble de cartes (boards en anglais) dont les dimensions sont normalisées.

Ces cartes sont reliées généralement à un même bus de type parallèle qui assure les communications entre les différents processeurs et le transport des données entre les différentes cartes ainsi que l'alimentation électrique de celles-ci.

Un bus couramment utilisé dans la pratique actuelle est le bus appelé MULTIBUS II dont la marque est déposée par la Société INTEL. L'architecture d'un tel bus est structurée autour d'un bus principal de type parallèle normalisé suivant la norme IEEE 1296. Ce bus principal est habituellement désigné par PSB.

La tendance du développement technologique des réseaux, l'utilisation de terminaux de plus en plus nombreux, conduisent à développer au sein même des ordinateurs, des contrôleurs de communication programmés, dont le rôle est de réduire la charge de l'unité centrale de l'ordinateur en effectuant une partie de la gestion, d'une part des messages émis par les différents terminaux appartenant à l'ordinateur vers le réseau de télécommunications auquel cet ordinateur est relié, et d'autre part des messages provenant des terminaux du réseau. Dans la pratique courante, un tel contrôleur de communication est réalisé autour d'un microprocesseur connecté à une ou plusieurs mémoires, qui comprend un logiciel de base (plus simple que celui de l'unité centrale) contenant des modules spécialisés permettant de gérer le bus commun aux différents éléments constitutifs de l'ordinateur et la ligne de transmission du réseau, et ayant des facilités pour constituer les files d'attente de messages (dans la mémoire associée au microprocesseur). Ce logiciel doit en outre permettre l'exécution simultanée d'un grand nombre de processus et pour cela gérer rapidement de nombreuses interruptions, ce qui implique des mécanismes de changement de contexte du microprocesseur très performants, ainsi que des niveaux multiples d'interruption. Un tel logiciel, qu'on peut appeler logiciel de communication, est par exemple le logiciel appelé CNS utilisé dans les produits de la série DN-7XXX de la Société BULL S.A., et également dans les produits CNS-A_{O} et CNS-A₁ de la série d'ordinateurs DPS-7000 de la même Société.

Dans le cas où l'ordinateur comprend un bus de type MULTIBUS II, le processeur de communication lui est relié. Il est disposé sur une carte connectée au bus PSB par l'intermédiaire d'un contrôleur, par exemple de type MPC-82389 (fabriqué par la Société INTEL) communiquant par mode message avec les autres éléments constitutifs fonctionnels de l'ordinateur.

L'utilisation à grande échelle de bus de type MULTIBUS II étant encore récente, il n'existe pratiquement pas de contrôleur de communication relié à un ordinateur muni d'un MULTIBUS II d'une part, et d'autre part relié à un ou plusieurs réseaux de type CSMA/CD.

La présente invention concerne précisément un contrôleur de communication entre au moins un ordinateur associé à un bus de type MULTIBUS II et une pluralité de terminaux reliés entre eux par l'intermédiaire d'au moins un réseau de type CSMA/CD, permettant de traiter simultanément le transfert d'un grand nombre de trames venant de ou allant vers le réseau, en réalisant l'adaptation des débits entre les informations circulant sur le bus et les informations circulant sur le réseau.

Selon l'invention, le contrôleur de communication entre au moins un ordinateur associé à un bus et une pluralité de terminaux d'au moins un réseau local de type à méthode d'accès à test de porteuse et détection de collision (CSMA/CD), reliés entre eux par l'intermédiaire d'au moins une liaison comprenant au moins un canal de données supporté par au moins un support de transmission, comprenant:
- une unité de base reliée au bus, qui gère et effectue le transfert de trames sur chacun des canaux de la liaison (le canal),
- une unité périphérique reliée d'une part à l'unité de base et d'autre part au support de transmission, qui transmet les données au réseau ou reçoit celles provenant de ce dernier,
est caractérisé en ce que l'unité de base comprend :
- un premier processeur de commande de transfert des trames depuis le bus vers le réseau et réciproquement, connecté au bus et associé à une première mémoire de stockage des trames avant leur transfert, qui gère le transfert des trames vers les différents canaux affectés à celles-ci (le canal affecté à celles-ci),
- un second processeur communiquant avec le premier réalisant, à l'émission, dans un premier temps, la division des trames provenant du bus en trames de type CSMA/CD, et effectuant, à l'émission et à la réception, le transfert de chacune des trames CSMA/CD ainsi constituées, canal par canal (sur ledit canal), depuis la première mémoire jusqu'à l'unité périphérique, et réciproquement,
et en ce que l'unité périphérique comprend un contrôleur CSMA/CD pour l'ensemble des canaux (le canal), piloté par le second processeur et relié au support de transmission, et comprenant au moins une mémoire de stockage de trames CSMA/CD, ces dernières étant stockées dans celle-ci avant émission vers le réseau par le contrôleur CSMA/CD, ou avant leur transfert vers la première mémoire sous la conduite du second processeur, en réception.

D'autres caractéristiques et avantages de la présente invention apparaîtront dans la description suivante donnés à titre d'exemples non limitatifs et en se référant aux dessins annexés.

Sur ces dessins :
- la Figure 1 est un schéma très simplifié du système informatique comportant le contrôleur de communication selon l'invention,
- la Figure 2 montre la structure matérielle du contrôleur de communication selon l'invention,
- la Figure 3 montre le schéma de la partie périphérique du contrôleur de communication selon l'invention,
- la Figure 4 montre la structure de l'ensemble logiciel et micrologiciel du contrôleur de communication selon l'invention,
- la Figure 5 est formée des Figures 5a et 5b. La Figure 5a est l'organigramme simplifié du fonctionnement d'un module micrologiciel affecté à un canal de données de la liaison, permettant le transfert de trames sur ce canal, alors que la Figure 5b montre la table de description du module micrologiciel dont l'organigramme simplifié est montré à la Figure 5a,
- la Figure 6 montre le mécanisme suivant lequel le logiciel et chacun des micrologiciels affectés à chacun des canaux communiquent entre eux,
- les Figures 7 et 8 illustrent le fonctionnement du contrôleur de communication selon l'invention, lors de l'émission ou la réception de trames,
- les Figures 9 et 10 sont des chronogrammes relatifs aux différentes opérations successives effectuées par le contrôleur de communication selon l'invention, d'une part à l'émission et d'autre part à la réception de trames.

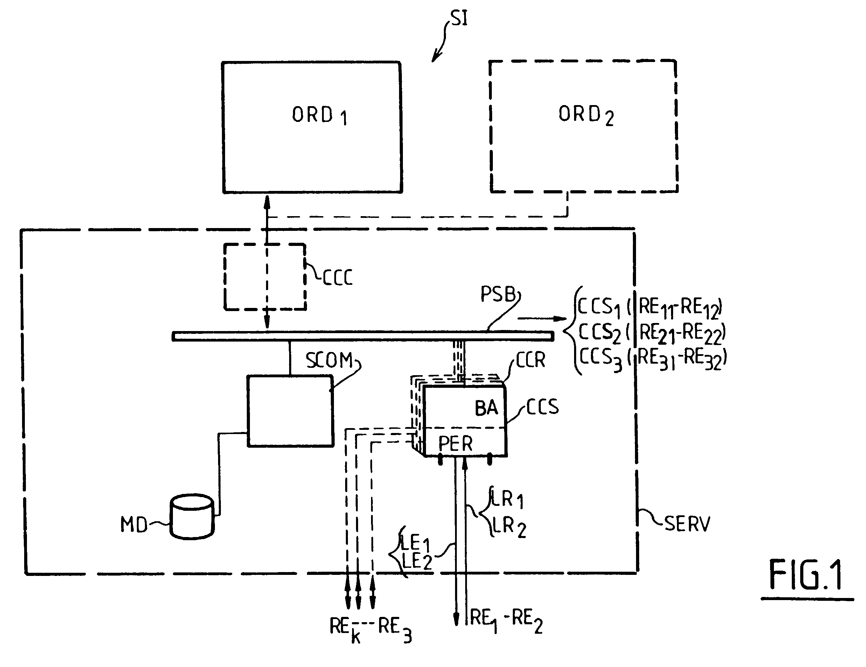

On considère la Figure 1 qui montre un système informatique SI comprenant au moins un ordinateur ORD₁ relié à un ensemble de k réseaux de types différents, RE₁, RE₂, ...., REₖ, par l'intermédiaire d'une pluralité de k liaisons de types différents.

La structure du système SI montrée à la Figure 1 a été volontairement simplifiée et comprend :
- l'ordinateur ORD₁,
- un serveur SERV de communication avec les réseaux RE₁ à REₖ, gérant et effectuant le transfert des trames depuis l'ordinateur ORD₁ vers les réseaux et réciproquement. Il convient de remarquer que ce serveur peut également relier d'autres ordinateurs aux différents réseaux précités, à savoir par exemple, l'ordinateur ORD₂ représenté en traits interrompus à la Figure 1.

Le serveur SERV comprend :
- une unité centrale SCOM qui administre et gère le serveur. Elle charge notamment tous les logiciels et micrologiciels associés à chacune des cartes constituant le serveur dans celles-ci, lors de leur initialisation.
- le bus PSB de préférence de type MULTIBUS II,
- un ensemble CCR de contrôleurs de communication permettant de relier le serveur (et par suite ORD₁) aux différents réseaux REₖ. Il comprend notamment le contrôleur de communication selon l'invention CCS permettant de le relier, dans l'exemple de réalisation décrit ici, à deux réseaux de type CSMA/CD, à savoir RE₁, RE₂ pouvant être, par exemple, un réseau de type ETHERNET et un réseau de type STARLAN, ou encore un réseau de type CHEAPERNET et un réseau de type STARLAN, ou encore deux réseaux de type ETHERNET ou deux réseaux de type CHEAPERNET, etc..

Le serveur SERV est ici considéré comme terminal des deux réseaux RE₁-RE₂ communiquant avec les autres terminaux de chacun de ceux-ci.

Le contrôleur de communication CCS peut également être relié par l'intermédiaire d'un autre contrôleur de communication identique CCS₁ à deux autres réseaux RE₁₁-RE₁₂ de type CSMA/CD, (ou de plusieurs autres contrôleurs de communication CCS₂, CCS₃ etc... à d'autres réseaux CSMA/CD, RE₂₁-RE₂₂, RE₃₁ -RE₃₂ etc...) CCS₁ étant également connecté par l'intermédiaire de son unité de base (voir plus loin) à PSB.

ORD₁ peut être relié soit directement au bus PSB, par l'intermédiaire d'un coprocesseur MPC 82389, soit, de préférence, par l'intermédiaire d'un coupleur central de communication CCC, surtout dans le cas où plusieurs ordinateurs ORD₁, ORD₂, etc... sont reliés au serveur SERV (CCC est représenté en pointillé à la Figure 1). Dans ce cas, le coupleur CCC a une structure analogue à CCS et est donc relié à ORD₁ par l'intermédiaire de sa partie périphérique (voir plus loin).

Les trames provenant de ORD₁ destinées aux réseaux RE₁-RE₂ parviennent par l'intermédiaire de PSB au contrôleur de communication CCS. Celui-ci divise chacune de celles-ci en une pluralité de paquets de données (le terme anglo-saxon correspondant à paquet de données est buffer. L'un ou l'autre de ces termes sera indifféremment employé dans la suite du texte), gère et effectue le transfert de cet ensemble de trames sur chacun des deux canaux de données qui correspondent l'un au premier réseau RE₁, l'autre au second réseau RE₂. Ces deux canaux sont désignés par C₁ et C₂. Du point de vue fonctionnel, on considérera donc dans la suite du texte que le contrôleur de communication CCS (et par suite ORD₁) est relié par l'intermédiaire d'une liaison comportant deux canaux C₁ et C₂ à un réseau RE formé par l'association des réseaux RE₁ et RE₂.

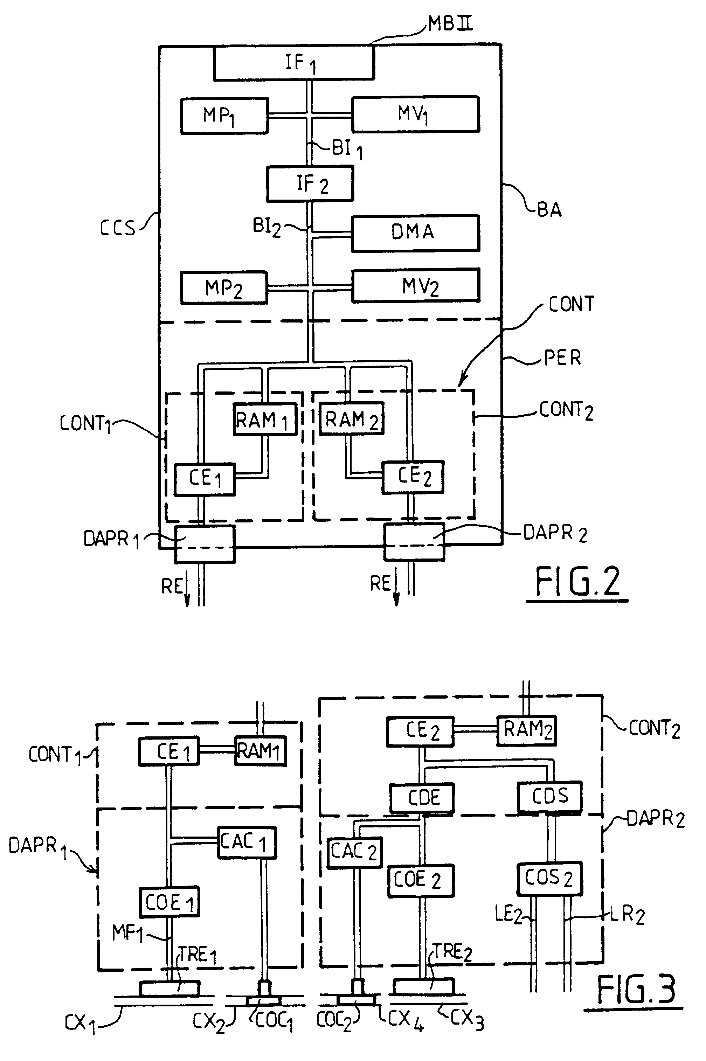

On considère désormais les Figures 2 et 3.

Le contrôleur de communication CCS selon l'invention comprend, ainsi qu'on peut le voir à la Figure 2, une unité de base BA et une unité périphérique PER.

L'unité de base BA comprend :
- une interface IF₁ avec le bus PSB, de type MULTIBUS II, définie par la norme IEEE P 1296, par exemple constituée par le MPC 82389 (voir plus haut),
- un premier microprocesseur MP₁ de type 68030 de la Société MOTOROLA, associé à une première mémoire vive MV₁, de 4 Mégaoctets de capacité,
- un second microprocesseur MP₂, par exemple de type 68000 de la Société MOTOROLA, associé à une seconde mémoire vive MV₂ de 512 Kilooctets de capacité.
- une interface IF₂ permettant le dialogue entre le premier et le second microprocesseur MP₁ et MP₂, assurant l'adaptation physique des signaux transitant sur le bus interne BI₁ du premier microprocesseur MP₁ avec ceux qui transitent sur le bus interne BI₂ du second microprocesseur MP₂,
- un contrôleur de type DMA (accès direct mémoire, ou encore direct access memory en anglais).

L'unité périphérique PER comprend :
- un contrôleur de type CSMA/CD, à savoir CONT, piloté par le second microprocesseur MP₂ de l'unité de base BA,
- un premier et un second dispositif de connexion physique respectivement au premier réseau RE₁ et au second réseau RE₂, à savoir DAPR₁, DAPR₂.

Le contrôleur CONT se compose en fait de deux contrôleurs CONT₁ et CONT₂ de type CSMA/CD, dont le premier est connecté par l'intermédiaire du dispositif d'adaptation physique DAPR₁ au premier réseau RE₁ et dont le second est connecté par l'intermédiaire du dispositif d'adaptation physique DAPR₂ au second réseau RE₂.

Le premier contrôleur CONT₁ comprend :
- un circuit intégré CE₁ d'émission et de réception pour réseau de type CSMA/CD,
- une troisième mémoire vive RAM₁ de 64 kilobits de capacité, connectée à CE₁ et au bus BI₂ par un bus du même type que ce dernier.

Le circuit intégré CE₁ est dans un exemple de réalisation préféré de l'invention, constitué par un circuit de la firme NATIONAL SEMICONDUCTORS appelé circuit SNIC ayant la référence 83901 chez ce constructeur.

Ce circuit intégré permet d'émettre des trames respectant la norme 8802.3 précitée ou de recevoir des trames provenant du réseau RE₁ conforme à cette norme. En particulier, un tel circuit intégré permet de réaliser les dispositions essentielles de la norme qui ont été rappelées ci-dessus concernant, d'une part les problèmes de l'émission, et d'autre part ceux de la réception de trames et de la détection des collisions. Un tel circuit comprend donc un circuit d'émission, un circuit de réception, un circuit détecteur de porteuse et un circuit détecteur de collision, ainsi qu'un dispositif d'encodage et de décodage qui permet d'émettre les trames selon par un exemple un code de type Manchester, ou de recevoir des trames émises suivant ce code. Pour plus de détails concernant la composition du circuit intégré CE₁, on se reportera aux fiches techniques du constructeur.

Si le réseau RE₁ est de type ETHERNET, CE₁ est associé à à une prise 15 points normalisée propre aux réseaux de ce type , à savoir COE₁. Cette prise est montée sur la carte (board en anglais) qui porte le contrôleur de commumnication CCS. Cette prise est alors reliée, de manière connue, par une liaison multifilaire MF₁ à un transceiver TRE₁ normalisé de type ETHERNET, lui-même relié au câble coaxial CX₁ par un raccordement également normalisé (non représenté pour simplifier la figure 3). Ce transceiver est extérieur à CCS.

Lorsque le réseau est de type CHEAPERNET, CE₁ est connecté à RE₁ par l'intermédiaire d'un transceiver de type CHEAPERNET normalisé, désigné par CAC₁, disposé sur la carte portant CCS, et d'un connecteur en T normalisé COC₁, lui-même relié au câble coaxial CX₂. COC₁ est extérieur à la carte portant CCS.

Les deux câbles CX₁ et CX₂ sont identiques et ont une impédance caractéristique de 50 ohms.

L'ensemble formé par la prise 15 points COE₁ et le transceiver CAC₁, constitue le dispositif d'adaptation physique DAPR₁.

Il convient de préciser que, du point de vue fonctionnel, le contrôleur CONT₁ est connecté soit à un réseau de type ETHERNET, soit à un réseau de type CHEAPERNET, mais il n'est jamais connecté simultanément à un réseau de type ETHERNET ou un réseau de type CHEAPERNET. En conséquence, le réseau RE₁ est donc fonctionnellement, soit un réseau de type ETHERNET, soit un réseau de type CHEAPERNET.

Le contrôleur CONT₂ comprend :
- un circuit intégré CE₂ pour l'émission ou la réception de trames de type, soit ETHERNET, soit CHEAPERNET, soit encore STARLAN,
- la quatrième mémoire vive RAM₂ connectée à la fois au circuit intégré CE₂ et au bus interne BI₂ du second microprocesseur MP₂, pour un bus de même type que ce dernier,
- un encodeur pour trames de type ETHERNET ou CHEAPERNET, à savoir CDE,
- un encodeur pour trames de type STARLAN, à savoir CDS.

Le circuit intégré CE₂ est dans un exemple de réalisation préféré de l'invention constitué par un circuit de type NIC de la firme NATIONAL SEMICONDUCTORS précitée ayant la référence 8390.

Du point de vue fonctionnel, l'ensemble constitué par CE₂ et CDE, d'une part, et CE₂ et CDS d'autre part, joue exactement le même rôle que le circuit intégré CE₁ du contrôleur CONT₁, le premier ensemble émettant ou recevant des trames de type ETHERNET ou CHEAPERNET, alors que le second ensemble émet ou reçoit des trames de type STARLAN.

Le dispositif d'adaptation physique DAPR₂ comprend :
- un transceiver CHEAPERNET CAC₂, disposé physiquement sur la carte qui forme le contrôleur de communication CCS,
- une prise 15 points COE₂,
- une prise STARLAN 8 points COS₂.

La prise COE₂ est reliée d'une part à l'encodeur CDE et d'autre part au transceiver ETHERNET TRE₂ lui-même connecté par raccordement normalisé (non représenté pour simplifier la figure 3) au câble coaxial CX₃ d'impédance caractéristique 50 ohms. COE₂ est portée par la carte qui forme CCS et TRE₂ est extérieur à celle-ci. Le transceiver CAC₂ est relié au réseau RE₂ par l'intermédiaire d'un connecteur en T connecté lui-même au câble coaxial CX₄ d'impédance caractéristique 50 ohms. CAC₂ est porté par la carte formant CCS et COC₂ est extérieur à celle-ci.

La prise STARLAN COS₂, portée par la carte qui forme CCS est reliée, d'une part à l'encodeur CDS et d'autre part au réseau RE₂ par l'intermédiaire d'une paire de fils téléphoniques LE₂-LR₂. Les coaxiaux CX₃-CX₄, identiques entre eux, sont identiques à CX₁-CX₂.

Par ailleurs, il est évident que les connecteurs en T CHEAPERNET COC₁ et COC₂ sont identiques entre eux, alors que les prises 15 points COE₁, COE₂, sont identiques entre elles.

De la même façon que pour le contrôleur CONT₁, le contrôleur CONT₂ est connecté fonctionnellement soit à un réseau de type CHEAPERNET, soit à un réseau de type ETHERNET, soit à un réseau de type STARLAN, sans jamais être connecté simultanément à trois réseaux de ce type. En d'autres termes, le réseau RE₂ est fonctionnellement, soit un réseau de type CHEAPERNET, soit un réseau de type ETHERNET, soit un réseau de type STARLAN, alors qu'il comporte les trois types de supports physiques propres à chacun de ces réseaux.

Le premier processeur MP₁ commande le transfert des trames circulant sur le bus PSB destinées à l'un ou l'autre des deux réseaux RE₁ ou RE₂ : à ce titre, il les reçoit et les stocke dans sa mémoire vive MV₁ en attendant qu'elles soient réellement transférées vers l'un ou l'autre des deux réseaux précités. Réciproquement, il reçoit dans sa mémoire vive MV₁ les trames provenant de l'un ou l'autre de ces deux réseaux, avant de les envoyer via le bus PSB vers ORD₁ ou ORD₂.

A l'émission, le premier processeur découpe chacune des trames en une pluralité de paquets de données (buffers) tels que BF₁, BF₂, ..., BFₙ. MP₁ alloue à chacun de ceux-ci un emplacement physique déterminé dans la mémoire vive MV₁. Dès que l'un des deux canaux de données C₁ ou C₂ (voir plus haut) est disponible, le premier processeur demande au second processeur MP₂ d'effectuer le transfert de la trame en question depuis la mémoire vive MV₁ vers le contrôleur CONT puis le réseau RE₁ ou RE₂, dans le canal approprié, par exemple C₁, puis d'envoyer cette trame vers l'un ou l'autre des deux réseaux RE₁ ou RE₂ à travers les bus internes BI₁, et BI₂ et l'interface IF₂. Il est clair que le premier processeur MP₁ procède de même avec chacune des trames, pour chacun des canaux C₁ et C₂. En d'autres termes, le premier processeur gère le transfert de chacune des trames qu'il reçoit de PSB ou de l'un des deux réseaux RE₁-RE₂, à travers les deux canaux C₁ et C₂ affectés à chacune et ce, tant à l'émission qu'à la réception. En réception, des emplacements physiques en MV₁ sont alloués, par MP₂, aux différents buffers constituant chaque trame, désignés par exemple par BF₁₀₁ à BFₘ, ces emplacements étant différents de ceux alloués à BF₁, ... BFₙ.

A l'émission, le second processeur MP₂, ayant reçu la demande de transfert de la part du premier processeur MP₁, effectue le transfert de la trame en question, buffer par buffer, dans le canal qui a été affecté à celle-ci, depuis la première mémoire MV₁ jusqu'à la partie périphérique PER, où les buffers de celle-ci sont stockés dans l'une des deux mémoires vives RAM₁ ou RAM₂, suivant que la trame en question, que nous désignerons sous le terme générique de trame bus est destinée à l'un ou l'autre des deux réseaux RE₁ ou RE₂.

A partir des différents buffers d'une trame bus,le second processeur MP₂ constitue des trames dites trames CSMA/CD ayant une longueur comprise entre une longueur minimum et une longueur maximum fixée par la norme 8802.3 précitée. Ainsi, une trame CSMA/CD est constituée à partir de plusieurs buffers stockés dans la mémoire MV₁ par le premier processeur MP₁. Dans un exemple de réalisation préféré de l'invention, tout buffer stocké dans la mémoire MV₁ et formé par le premier processeur MP₁ a une longueur donnée paramétrable, par exemple 200 octets, alors que la longueur maximum d'une trame CSMA/CD est de 1500 octets. Une trame CSMA/CD peut donc être, par exemple, formée par l'association de huit buffers. MP₂ dispose la suite de ces derniers, de telle sorte qu'ils soient disposés physiquement à la suite les uns des autres dans la mémoire RAM₁.

Dès que le contrôleur CONT reçoit de la part du second processeur MP₂ l'ordre de transférer vers l'un ou l'autre des deux réseaux RE₁ ou RE₂ une trame CSMA/CD, l'un ou l'autre des deux circuits intégrés CE₁ ou CE₂ va chercher les données formant la trame CSMA/CD stockée dans la mémoire vive RAM₁ ou RAM₂ et les transfère sur le réseau RE₁ ou RE₂ en respectant les dispositions de la norme 8802.3 précitée.

En réception, le second processeur MP₂ effectue le transfert de la trame CSMA/CD provenant de l'un des deux réseaux RE₁-RE₂ dans le canal approprié en allant la chercher dans la mémoire vive RAM₁ - RAM₂ où elle a été stockée par l'un des deux circuits intégrés CE₁, CE₂. Le second processeur redécoupe la trame CSMA/CD reçue en un certain nombre de buffers dont la longueur maximale est de 200 octets, ces buffers étant envoyés par ce dernier depuis l'une ou l'autre des deux mémoires vives RAM₁, RAM₂ vers la première mémoire MV₁, dans les emplacements de cette dernière qu'il a alloués à cet effet.

Le but de la présence des deux mémoires vives RAM₁ ou RAM₂ est en fait d'adapter les vitesses entre le débit CSMA/CD sur l'un ou l'autre des deux réseaux RE₁, RE₂, qui est le plus fréquemment de 10 Mégabits/s et la vitesse de traitement des trames et des buffers les constituant par MP₁ et MP₂. Ipso facto, elles assurent l'adaptation entre, d'une part les débits sur les réseaux RE₁-RE₂, et d'autre part sur le bus PSB.

Le premier et le second processeur MP₁, MP₂, exécutent leur travail sur instructions respectivement d'un logiciel de communication CNS (voir plus haut) et d'un micrologiciel AML.

Lors de la mise sous tension du contrôleur de communication CCS, le logiciel de communication CNS et le micrologiciel AML qui sont implantés sur les mémoires à disque MD du serveur SERV, sont chargés dans chacune des mémoires vives MV₁ et MV₂, respectivement. Ce chargement s'effectue à travers le bus PSB. Bien entendu, il a lieu une fois que la carte correspondant au contrôleur de communication CCS a été initialisée. Cette initialisation s'effectue sous la conduite d'un programme micrologiciel stocké dans une mémoire programmable de type PROM implantée dans l'unité de base BA et non représentée à la Figure 1 et à la Figure 2 pour simplifier.

Le logiciel de communication est en fait le système d'exploitation du contrôleur de communication CCS (il constitue l'operating system selon la terminologie anglo-saxonne). Ce logiciel organise le travail de liaison entre le bus PSB et le micrologiciel AML qui est chargé plus spécialement d'effectuer le transfert de chacune des trames dans les canaux C₁ , C₂ aussi bien à l'émission qu'à la réception.

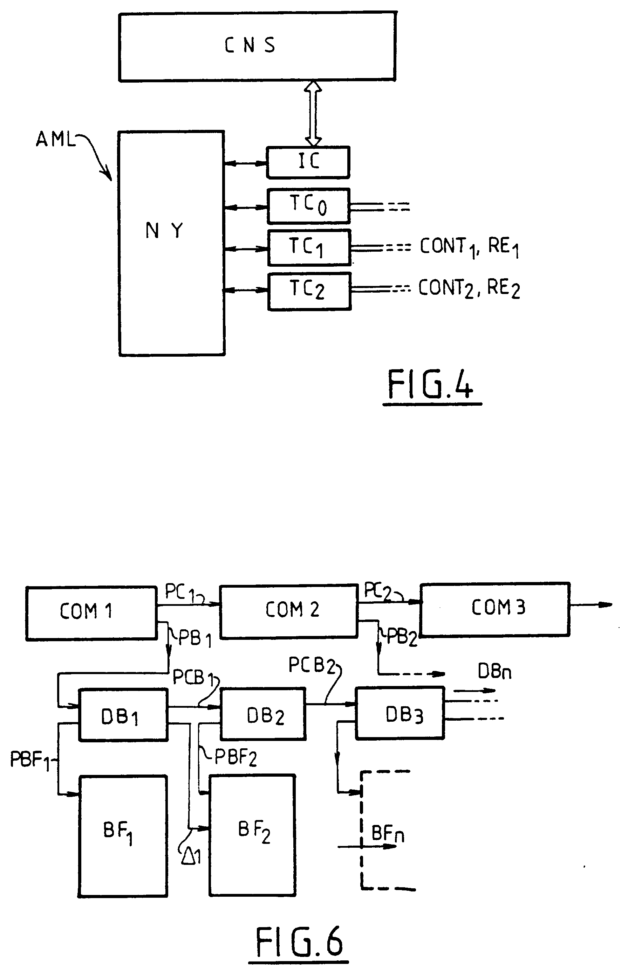

On considère la Figure 4 qui montre de façon fort schématique les liaisons existant entre le logiciel de communication CNS et le micrologiciel AML.

Le micrologiciel AML comprend un noyau NY, une interface de communication IC, permettant le dialogue entre le logiciel de communication CNS et le micrologiciel AML, ainsi qu'une pluralité de modules micrologiciels, encore appelés tâches, à savoir TC₀, TC₁, TC₂. Les modules TC₁, TC₂ correspondent chacun aux deux canaux C₁, C₂ définis plus haut. Ils sont donc chargés d'effectuer le transfert des trames affectées à chacun de ces canaux depuis la mémoire MV₁ vers la partie périphérique PER et réciproquement. La tâche TC₀ est propre à la carte portant le contrôleur CCS. Elle est utilisée pour remettre à 0 l'ensemble des composants constituant la carte CCS.

Chaque tâche correspondant à un canal est une tâche indépendante des autres. Le déroulement des tâches est organisé en temps réel par le noyau NY.

Le micrologiciel AML qui reçoit ses commandes du logiciel CNS, est vu par celui-ci comme un ensemble de trois tâches indépendantes. Néanmoins, les tâches TC₀, TC₁, TC₂, peuvent fonctionner simultanément sous la conduite du noyau NY. Chacune d'elles a donc des liaisons directes avec ce dernier mais n'en a aucune avec les autres.

Le module IC gère l'interface avec le logiciel CNS. Il acquitte les demandes provenant de celui-ci et les aiguille vers les différentes tâches correspondant aux différents canaux pour que celles-ci soient exécutées. Symétriquement, il se charge des transferts d'état ou de données provenant des canaux correspondant à chacune des tâches, destinées au logiciel CNS.

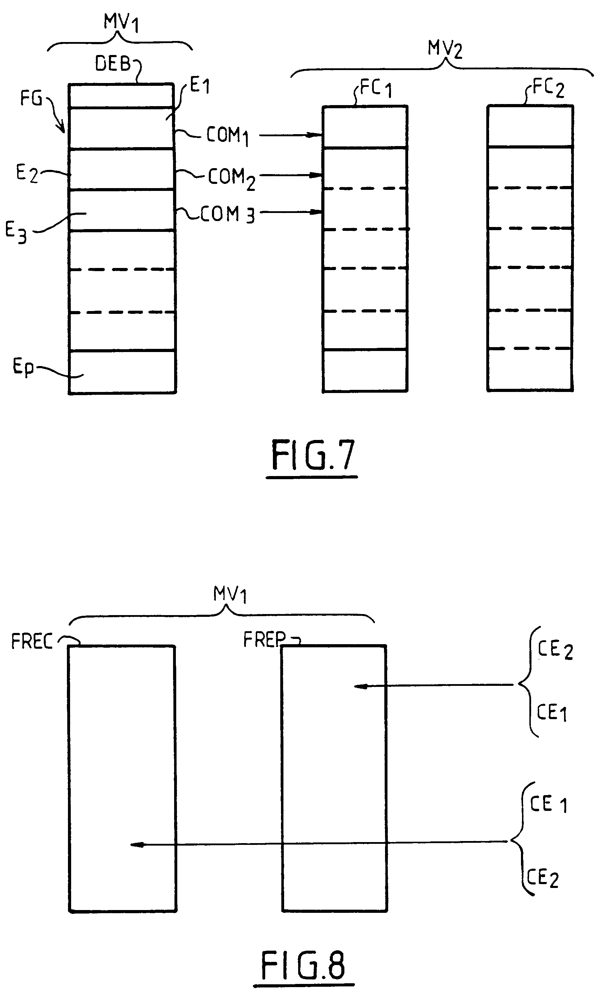

Les échanges entre l'unité de base BA et l'unité périphérique PER se définissent par des descripteurs de commande (voir figure 6). Un descripteur de commande correspond à une trame déterminée soit à l'émission, soit à la réception, et définit les opérations qui doivent être accomplies sur celles-ci (voir plus loin).

Les descripteurs de commande occupent dans la mémoire MV₁ des emplacements déterminés par le logiciel de communication CNS. Les adresses physiques de ces emplacements et les emplacements correspondants eux-mêmes ne sont pas libérés tant que les trames associées à ces descripteurs de commande ne sont pas acquittées (n'ont pas été envoyées en totalité s'il s'agit d'une émission ou n'ont pas été reçues en totalité s'il s'agit d'une réception). Ainsi, à une trame bus TR₁, à l'émission, correspond une descripteur de commande COM₁(voir Figure 6).

A une trame bus TR₂ correspond une descripteur de commande COM₂. A une trame TR₁₀₁, de type CSMA/CD, en réception, correspond une descripteur de commande COM₁₀₁, etc...

Pour un même canal C₁ ou C₂, les descripteurs de commande sont chaînés par l'intermédiaire de pointeurs de chaînage.

Autrement dit, le descripteur de commande COM₁ est chaîné au descripteur COM₂ par un pointeur de chaînage PC₁, le descripteur COM₂ est chaîné au descripteur COM₃ par un pointeur de chaînage PC₂. Un pointeur de chaînage n'est autre que l'adresse logique occupée par le descripteur de commande qui suit le descripteur contenant le pointeur de chaînage. Ainsi le pointeur de chaînage PC₁ indique l'adresse logique du descripteur COM₂ et le pointeur de chaînage PC₂ indique l'adresse logique du descripteur COM₃, etc...

On suppose que la trame TR₁ comprend (voir également Figure 6) les buffers BF₁, BF₂, ..., BFₙ et que la trame TR₁₀₁ est composée des buffers BF₁₀₁ à BFₘ. A chaque buffer correspond un emplacement physique déterminé en mémoire défini par un descripteur de buffer. Ainsi, aux buffers BF₁ à BFₙ correspondent les descripteurs de buffer DB₁ à DBₙ. De même, aux buffers BF₁₀₁ à BFₘ correspondent les descripteurs de buffer DB₁₀₁ à DBₘ. Bien entendu, les descripteurs de buffer occupent dans la mémoire MV₁ où ils sont situés des emplacements physiques différents des buffers auxquels ils sont associés. Ainsi, DB₁ occupe-t-il en mémoire un emplacement différent du buffer BF₁ etc.

Par ailleurs, par abus de langage, l'homme de l'art affecte la même dénomination aux buffers qu'aux emplacements physiques qui leur sont affectés en mémoire MV₁. Ainsi, par exemple, BF₁ désigne aussi bien un buffer ou paquet de données que l'emplacement physique où il est stocké en mémoire MV₁. Contenant et contenu ont donc la même désignation et ceci vaut également pour les descripteurs de commande et descripteurs de buffer.

Chaque descripteur de commande comprend un pointeur vers le descripteur du premier buffer physique de la trame correspondante. Ainsi, le descripteur de commande COM₁ contient le pointeur PB₁ définissant l'adresse du descripteur de buffer DB₁, c'est-à-dire l'adresse de l'emplacement physique occupé par ce descripteur dans la mémoire MV₁. De même, le descripteur de commande COM₂ contient le pointeur PB₂ définissant l'emplacement physique du descripteur de buffer correspondant au premier buffer de la trame TR₂, etc.

Chaque descripteur de buffer contient un pointeur vers le descripteur de buffer suivant. Ainsi, le descripteur de buffer DB₁ contient le pointeur PCB₁ définissant l'adresse, c'est-à-dire l'emplacement physique occupé par le descripteur de buffer DB₂. Ce pointeur est désigné par PCB₁.

En conclusion, un descripteur de commande, tel que COM₁, COM₂, ... COM₁₀₁ , etc..., comprend :
- un pointeur de chaînage vers un autre descripteur de commande tel que PC₁, PC₂, etc. Ce pointeur est destiné à être utilisé par l'interface de communication IC et se trouve en tête du descripteur,
- un pointeur vers le descripteur du premier buffer physique, tel que PB₁, PB₂, etc,
- le nombre total d'octets que contient la trame formée par la chaîne de buffers BF₁ à BFₙ, ou BF₁₀₁ a BFₘ, etc, correspondant au descripteur de commande en question,
- un index indiquant le début réel des données dans le premier buffer physique, c'est-à-dire par exemple, l'adresse physique du début des données dans le premier buffer physique BF₁, dans la mémoire MV₁,
- un indicateur précisant si la commande est une commande immédiate : les commandes immédiates sont des commandes qui n'impliquent pas l'utilisation de paquets de données destinés à être transférés vers le réseau ou provenant de celui-ci. Ces commandes immédiates peuvent être par exemple une commande d'activation d'un canal en vue d'une réception ou une commande de désactivation de ce même canal en réception, dès qu'une trame a été complètement reçue et transmise vers ORD₁ (ou ORD₂) par le bus PSB.
- un champ status qui indique le résultat de l'exécution de la commande, c'est-à-dire si la commande a été ou non correctement exécutée,
- un champ de bits de commande comportant le code de la commande : il existe plusieurs types de commandes qui seront définies ci-dessous et auxquelles correspond un code déterminé.

Outre les commandes immédiates (activation de canal en réception et désactivation de canal) définies ci-dessus, existent deux autres types de commandes, à savoir une commande pour l'émission de données et une commande de purge des commandes relative à l'émission de données, lorsque l'émission sur un canal doit être, pour une raison ou une autre, stoppée. Cette commande de purge est une commande immédiate.

Il convient de préciser que le format des descripteurs de commande est défini lors de l'initialisation de la carte portant le contrôleur de communication CCS et est défini par la tâche TC₀, c'est-à-dire le module micrologiciel correspondant au canal C₀. Une fois ce format défini lors de l'initialisation du contrôleur de communication CCS, il est immuable.

Le format des descripteurs de buffer tels que DB₁ à DBₙ ou DB₁₀₁ à DBₘ est défini par le logiciel de communication CNS. Il comprend :
- un pointeur de chaînage vers le descripteur de buffer suivant, par exemple le pointeur de chaînage PCB₁. Ce pointeur est une adresse logique, définissant l'emplacement mémoire où se trouve le descripteur de buffer correspondant c'est-à-dire DB₂.
- un index définissant l'emplacement physique occupé en mémoire par le début du buffer correspondant, par exemple le début du buffer BF₁ pour le descripteur DB₁. De même, le descripteur de buffer DB₂ contient un index définissant le début de l'emplacement physique occupé en mémoire par le buffer BF₂.

En fait, cet index de début est obtenu de la manière suivante :

L'adresse définissant l'emplacement physique occupé en mémoire MV₁ par le buffer BF₂ par exemple (le raisonnement est valable pour les autres buffers), qu'on peut également définir comme l'adresse physique du buffer BF₂ est obtenue en ajoutant à l'adresse logique définie par le pointeur PBF₂ de ce même buffer contenu dans le descripteur associé DB₂, une grandeur logique Δ 1. Ainsi, on peut écrire, si I₂ est l'index de début de BF₂, I₂ = PBF₂ + Δ₁ :
- l'index définissant la fin de l'emplacement physique occupé par le buffer physique correspondant. DB₁, par exemple, contient donc l'index définissant l'emplacement physique de la fin du buffer BF₁.
- la taille totale en nombre d'octets du buffer correspondant. DB₁, par exemple, contient donc le nombre total d'octets de données contenus dans le buffer BF₁.

Il convient de préciser qu'en ce qui concerne aussi bien les descripteurs de commande que les descripteurs de buffer, toute adresse logique est aussi une adresse physique.

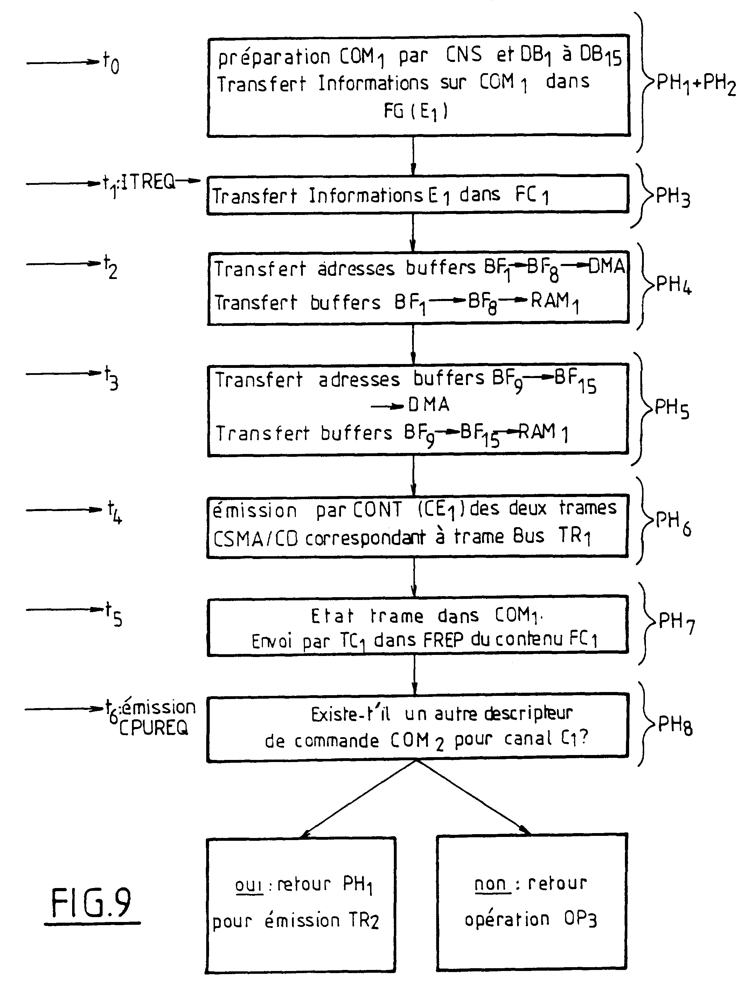

La première mémoire MV₁ contient également plusieurs zones mémoire fonctionnant suivant le principe des mémoires FIFO. Ces zones mémoire sont définies par le logiciel de communication CNS. MV₁ contient en fait, 3 zones mémoire FIFO, à savoir FG, FREC, FREP (figures 7 et 8). Chacune de ces zones mémoire FIFO contient un certain nombre d'éléments, à savoir p éléments.Chaque élément contient l'adresse d'un descripteur de commande et le numéro de canal correspondant à la commande définie par ce descripteur. Le logiciel CNS, pour chaque zone mémoire FIFO, définit donc l'adresse de début de cette zone mémoire, l'index de l'élément de tête, c'est-à-dire l'adresse de l'élément de tête, l'index de l'élément de queue, c'est-à-dire l'adresse de l'élément de queue, ainsi que le nombre d'éléments contenus dans cette zone mémoire FIFO. Ainsi, par exemple, la zone mémoire FIFO FG contient les p éléments E₁, E₂, E₃, ..., Eₚ (voir figure 7). Le logiciel CNS définit donc l'adresse du début DEB de la zone FIFO FG, l'index de l'élément de tête E₁, l'index de l'élément de queue Eₚ et le nombre p d'éléments. Il en est évidemment de même pour les zones mémoires FIFO FREC, FREP qui contiennent le même nombre d'éléments p. L'élément E₁ contient donc l'adresse du descripteur de commande COM₁ ainsi que le canal correspondant à la commande définie par ce descripteur, par exemple, le canal C₁. L'élément E₂ contient l'adresse du descripteur de commande COM₂ et l'adresse du canal correspondant, ici C₁ (voir plus haut). L'élément E₃ contient l'adresse du descripteur de commande COM₃ et le canal correspondant, à savoir C₁, ..., et ainsi de suite pour les éléments E₃ à Eₚ.

La seconde mémoire MV₂ contient également outre l'ensemble des microprogrammes qui ont été définis plus haut, un certain nombre de zones mémoire FIFO, en nombre égal au nombre de canaux de données, à savoir C₁, C₂. Elle contient donc 2 zones mémoire FIFO, à savoir FC₁, FC₂. (voir Figure 7).

Chacun des FIFO FC₁, FC₂ contient l'adresse des descripteurs de commande correspondant au canal associé, ainsi que le numéro de ce canal. Ainsi, le FIFO FC₁ contient l'adresse du descripteur de commande COM₁, et le numéro du canal correspondant à ce descripteur de commande, c'est-à-dire le canal C₁, ainsi que l'adresse de COM₂ et le numéro du canal C₁, etc ... .

Les informations que contiennent chacun des FIFO FC₁, FC₂, telles que définies ci-dessus, sont transférées dans celles-ci depuis la mémoire FIFO FG de MV₁ dans les conditions qui seront décrites plus loin, en liaison avec le fonctionnement du contrôleur de communication CCS selon l'invention.

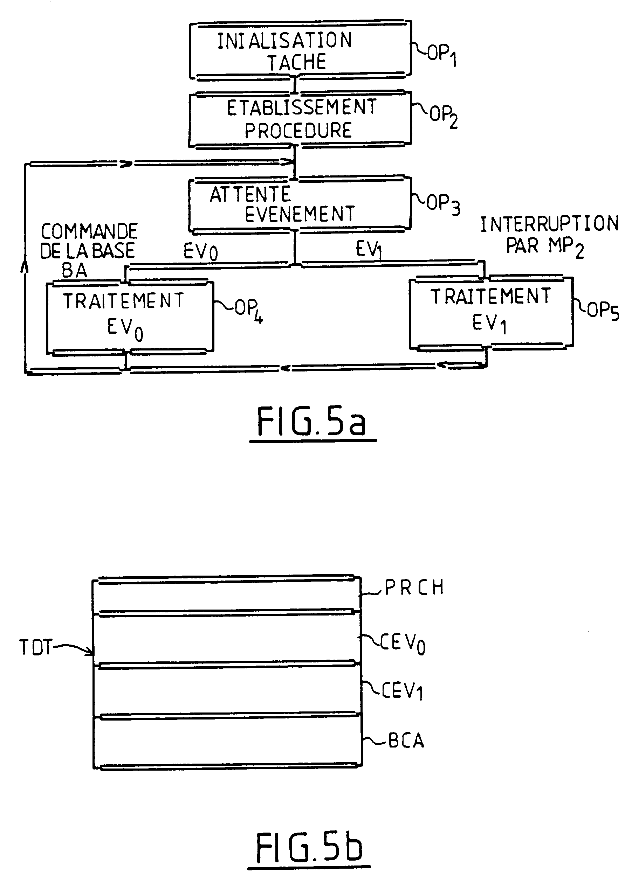

On considère désormais les Figures 5a et 5b.

On considère la Figure 5a qui est un schéma logique simplifié des différentes opérations OP₁ à OP₅ mises en oeuvre lors de l'exécution de chacune des tâches TC₁, TC₂.

L'opération OP₁ est une opération d'initialisation de la tâche effectuée par le noyau NY.

L'opération OP₂ qui succède à l'opération OP₁ permet d'établir chacune des procédures pouvant être mise en oeuvre par la tâche TC₁ (ou TC₂), c'est-à-dire soit une procédure d'émission de trames soit une procédure de réception de trames soit une procédure d'activation ou de désactivation du canal correspondant. Lors que cette opération, la tâche va chercher les adresses des procédures permettant de traiter soit les commandes du logiciel CNS, lors d'une demande d'émission, soit les adresses des procédures traitant les actions induites par une interruption du processeur MP₁, lorsqu'il est nécessaire de recevoir une trame provenant du réseau RE₁-RE₂ (RE).

Lors de l'opération OP₃, la tâche se met en attente d'événement. Cet événement peut être soit une commande du logiciel CNS, par exemple lorsque celui-ci veut émettre une trame vers le réseau RE, soit une interruption du microprocesseur MP₂, pour une réception de trame provenant de RE. Dans le premier cas (commande du logiciel CNS) on a à faire à l'événement EV₀. Dans le second cas, on a à faire à l'événement EV₁.

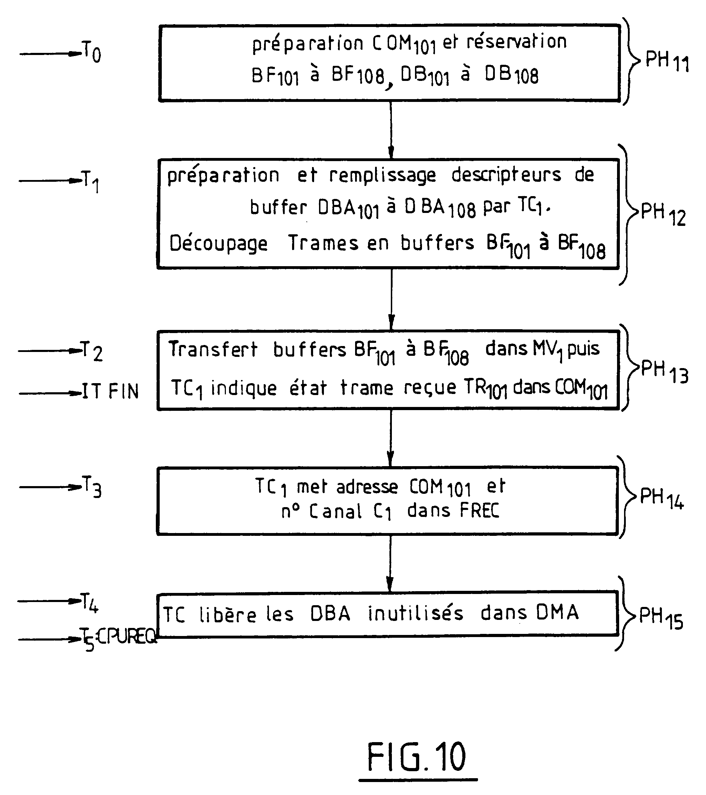

La façon dont les événements EV₀ ou EV₁ se déroulent est exposée en détail plus loin dans la description en liaison avec les Figures 6, 7, 8, 9, 10.

Lorsque l'une ou l'autre des opérations OP₄ ou OP₅ est terminée on revient à l'opération OP₃.

La mémoire MV₂ contient également une table de description TDT de chaque tâche TC₁, TC₂. Cette table de description, montrée à la figure 5b, est créée dynamiquement à chaque lancement de l'une des tâches TC₁, TC₂, c'est-à-dire qu'elle est établie chaque fois que le noyau NY fait appel à l'une des tâches TC₁ ou TC₂. TDT comprend les quatre grandes parties suivantes :
- Partie PRCH : cette partie définit le protocole utilisé sur le canal, ici le protocole propre aux réseaux CSMA/CD défini par la norme ISO 8802.3.
- Partie CEV₀ : cette partie contient les adresses des procédures traitant l'événement EV₀ . Elle est construite lors de l'opération OP₂ d'établissement de la procédure.
- Partie CEV₁ : cette partie contient les adresses des procédures traitant l'événement EV₁. Elle est construite lors de l'opération OP₂.
- Partie PCA : cette partie contient les informations nécessaires à la tâche TCᵢ (TC₁, TC₂) pour la gestion des buffers d'une trame.

Le contrôleur DMA comporte au moins un registre contenant une pluralité de descripteurs de buffers DBAᵢ pour l'émission, DBAⱼ pour la réception, qui sont constitués de la manière suivante :

A l'émission, pour chaque trame CSMA/CD, chaque descripteur de commande DBAᵢ contient, pour chaque buffer BFᵢ constituant cette trame, l'adresse de ce buffer en mémoire MV₁, la longueur en octets de celui-ci, et d'autre part l'adresse que ce buffer occupera dans l'une ou l'autre des deux mémoires RAM₁, RAM₂ du contrôleur CONT. C'est le second processeur MP₂ qui va chercher dans le descripteur de buffer DBᵢ correspondant au buffer BFᵢ, l'adresse de ce buffer dans la mémoire MV₁ ainsi que sa longueur en octets et les inscrit dans le descripteur de buffer DBAᵢ des registres du contrôleur DMA. Par ailleurs, MP₂ alloue au buffer BFᵢ un emplacement déterminé dans l'une ou l'autre des deux mémoires RAM₁, RAM₂ et inscrit dans le descripteur de buffer DBAᵢ l'adresse de cet emplacement.

En réception, le second processeur MP₂ divise chaque trame CSMA/CD en un certain nombre de buffers ayant une longueur fixe de 200 octets, c'est-à-dire ayant un format compatible avec les buffers de MV₁. Pour chacun de ces buffers, le second processeur MP₂ fait correspondre un emplacement déterminé BFⱼ auquel correspond un descripteur de buffer DBⱼ dans la première mémoire MV₁. Le second processeur MP₂ incrit dans le descripteur de buffer DBAⱼ l'adresse de l'emplacement physique du buffer BFⱼ dans la mémoire MV₁ et la longueur de celui-ci (longueur fonction du résultat de la division de la trame reçue en une pluralité de buffers par MP₂) ainsi que l'adresse de l'emplacement physique occupé par ce buffer dans la mémoire RAM₁ (ou RAM₂).

Il convient de préciser que chacune des mémoires RAM₁, RAM₂ est en fait divisée en deux zones mémoires, à savoir ZE₁, ZR₁ pour RAM₁ et ZE₂, ZR₂ pour RAM₂.

Les zones ZE₁ et ZE₂ sont celles où sont stockées les trames destinées à l'émission, alors que les zones ZR₁ et ZR₂ sont destinées aux trames reçues.

La capacité mémoire des zones ZE₁, ZE₂ est très sensiblement inférieure à la capacité mémoire des zones ZR₁, ZR₂. Ceci est dû au fait qu'il est possible de maîtriser le débit d'émission des différentes trames, alors qu'il est impossible de maîtriser le débit des trames arrivant en réception puisque CCS n'est pas maître du rythme et du débit d'émission des différents terminaux raccordés à l'un ou l'autre des deux réseaux RE₁, RE₂.

Le fonctionnement du contrôleur de communication CCS sera mieux compris à la lumière des explications fournies ci-dessous en relation avec les Figures 6 à 10.

On considère donc un événement EV₀ et on suppose que l'on veut émettre depuis CCS une trame bus TR₁ composée par exemple de 15 buffers BF₁ à BF₁₅ et qu'elle est émise par le canal C₁, grâce à la tâche TC₁. L'émission de la trame TR₁ comporte les différentes phases successives suivantes :

### 1ere phase PH₁:

Le premier processeur MP₁ prépare, sous les instructions du logiciel de communication CNS, à partir de l'instant t₀ (Figure 9) le descripteur de commande COM₁. Les informations contenues dans ce dernier vont occuper en mémoire MV₁ un emplacement physique préparé à cet effet par CNS, lors de l'initialisation de la carte portant le contrôleur CCS. Ainsi qu'il a été dit plus haut, à ce descripteur de commande COM₁ correspond une pluralité de descripteurs de buffer DB₁ à DB₁₅ correspondant chacun aux buffers BF₁ à BF₁₅. Les descripteurs de buffer sont donc préparés par le premier processeur MP₁. (Les emplacements physiques réservés aux descripteurs de buffer sont préparés, de même que les emplacements physiques des descripteurs de commande lors de l'initialisation de CCS). Par ailleurs, les octets correspondant aux 15 buffers de la trame TR₁ sont stockés dans chacun des emplacements physiques correspondant aux buffers BF₁ à BF₁₅. Dès que le descripteur de commande COM₁, les descripteurs de buffers BF₁ à BF₁₅ sont préparés, on passe à la phase PH₂.

### Phase PH₂:

Le logiciel CNS met dans le FIFO FG, dans le premier élément E₁, l'adresse du descripteur de commande COM₁, ainsi que le n° du canal correspondant, ici celui du canal C₁, c'est-à-dire 1. Une fois que l'élément E₁ est rempli par ces informations, le premier processeur MP₁ envoie une interruption ITREQ au second processeur MP₂ à l'instant t₁. En ce qui concerne l'émission de la trame TR₁, le logiciel de communication CNS a fini momentanément son travail. On passe alors à la phase PH₃ (instant t₁).

### Phase PH₃:

Lors de cette phase, les instructions exécutées par le processeur MP₂ sont celles de l'interface de communication IC. Dès que l'interruption ITREQ a été reçue par MP₂, ce dernier transfère les informations contenues dans l'élément E₁ de FG dans FC₁. Il est clair qu'on peut transférer dans n'importe lequel des deux FIFOs de MV₂, à partir de FG, des informations contenues dans les éléments de ce dernier correspondant à des descripteurs de commande associés à l'un ou l'autre des deux canaux C₁, C₂. En effet, le processeur MP₁ sous la conduite de CNS peut préparer plusieurs trames autres que TR₁, à savoir les trames TR₂, TR₃, etc..., avec leurs descripteurs de commande et descripteurs de buffer associés. Par ailleurs, pour un même canal, qu'il s'agisse de C₁ ou C₂, on peut transférer simultanément plusieurs adresses de descripteurs de commande ainsi que le n° de canal correspondant dans FC₁, FC₂ correspondant à ces canaux C₁ ou C₂. Dès que le transfert de ces informations dans FC₁ et FC₂ est effectué, on passe à la phase PH₄ (instant t₂).

### Phase PH₄:

L'interface de communication IC prévient la tâche TC₁ correspondante. Les instructions fournies par celle-ci vont être effectuées par le second processeur MP₂. La tâche TC₁ va chercher l'adresse du descripteur de commande COM₁ dans FC₁, puis va analyser le descripteur de commande lui-même dans la mémoire MV₁ pour examiner la nature de la commande et savoir s'il s'agit d'une émission, d'une réception ou encore d'une commande immédiate. La tâche TC₁ trouve dans ce descripteur de commande l'adresse du descripteur de buffer DB₁, va chercher dans celui-ci l'adresse du buffer correspondant BF₁. Elle met alors l'adresse de ce dernier dans le descripteur de buffer DBA₁ du contrôleur DMA. Elle y met également le nombre d'octets correspondant à BF₁ qu'elle trouve dans le descripteur DB₁. La tâche TC₁ continue ainsi à chercher les adresses des buffers BF₂ à BF₈ dans les descripteurs de buffer DB₂ à DB₈ et transfère ces informations, ainsi que le nombre d'octets correspondant à ces buffers, dans les descripteurs de buffer DBA₂ à DBA₈ de DMA. Lorsque le descripteur de buffer DBA₈ est rempli, la tâche TC₁ constate que l'ensemble des buffers BF₁ à BF₈ constitue une trame de type CSMA/CD, le nombre total d'octets de ces 8 buffers étant supposé inférieur à 1500. La tâche TC₁ transfère les buffers BF₁ à BF₈ dans la mémoire vive, par exemple RAM₁, du contrôleur CONT₁. Elle indique alors à ce dernier l'adresse du début de la trame CSMA/CD ainsi constituée par les buffers BF₁ à BF₈ dans la mémoire RAM₁, et la longueur de cette trame, ces informations étant stockées par le contrôleur CONT₁ dans l'un des registres faisant partie du circuit intégré CE₁. On passe alors à la phase suivante PH₅ (instant t₃).

### Phase PH₅:

La tâche TC₁ remplit les descripteurs de buffer DBA₉ à DBA₁₅ du contrôleur DMA de la même manière qu'elle avait rempli les descripteurs DBA₁ à DBA₈. Elle y inscrit donc les adresses des buffers BF₉ à BF₁₅ ainsi que le nombre d'octets que ceux-ci contiennent, et ce à partir des informations qu'elle trouve dans les descripteurs de buffer DB₉ à DB₁₅ de la mémoire MV₁. On suppose que les 7 buffers BF₉ à BF₁₅ constituent une seconde trame de type CSMA/CD, leur longueur totale étant supposée inférieure à 1500 octets. On voit, par conséquent, que la trame bus TR₁ donne naissance à deux trames de type CSMA/CD. Dès que les descripteurs de buffer DBA₉ à DBA₁₅ sont remplis, la tâche TC₁ procède au transfert des buffers BF₉ à BF₁₅ dans la mémoire vive RAM₁. Elle transfère également dans les registres du contrôleur CONT₁ (les registres du circuit intégré CE₁) l'adresse du début en mémoire RAM₁ de cette seconde trame de type CSMA/CD, ainsi que sa longueur en octets. On passe ensuite à la phase PH₆ (instant t₄).

### Phase PH₆:

Le contrôleur CONT₁ (en fait le circuit intégré CE₁) piloté par le microprocesseur MP₂ sous les instructions de TC₁ émet vers le réseau RE₁, successivement, les deux trames de type CSMA/CD constituées par les buffers BF₁ à BF₈ d'une part, BF₉ à BF₁₅ d'autre part. On passe ensuite à la phase PH₇ (instant t₅).

### Phase PH₇:

Dès que les deux trames CSMA/CD correspondant à la trame bus TR₁ sont émises, c'est-à-dire dès que le dernier buffer BF₁₅ de la seconde trame CSMA/CD est émis, la tâche TC₁ envoie dans le FIFO FREP de MV₁ le contenu de FC₁, c'est-à-dire l'adresse du descripteur de commande COM₁, plus le n° du canal correspondant C₁. Parallèlement, la tâche envoie l'état d'émission de la trame bus TR₁ dans le descripteur de commande COM₁. En effet, ce descripteur comprend un endroit prévu à cet effet, vide au départ, c'est-à-dire au moment où CNS prépare COM₁ (voir phase PH₁).

Une fois cela effectué TC₁ envoie au premier processeur MP₁ un signal signifiant que l'émission de la trame bus TR₁ est terminée, ce signal étant appelé CPUREQ et étant émis à l'instant t₆. MP₁ va alors lire dans FREP le contenu de FC₁ (voir ci-dessus) puis va lire le status du descripteur de commande correspondant CM₁ dans MV₁, c'est-à-dire l'état d'émission de TR₁, autrement dit, si TR₁ a été correctement émise ou non.

Si TR₁ a été correctement émise, on passe alors à la phase PH₈. Sinon, on réémet la trame TR₁, à partir de l'opération PH₁.

### Phase PH₈:

La tâche TC₁ va chercher dans FC₁ s'il existe une adresse d'un autre descripteur de commande et le n° du canal correspondant. Si cela est le cas, on passe à la phase PH₁ pour l'émission d'une autre trame bus, par exemple, TR₂ (descripteur de commande COM₂). Si cela n'est pas le cas, on passe à l'opération OP3, c'est-à-dire que la tâche TC₁ est mise en position d'attente d'événement.

Il est clair que la tâche TC₂ peut travailler en parallèle avec TC₁.

On considère désormais l'événement EV₁ et on suppose que le contrôleur CCS reçoit de l'un ou l'autre des deux réseaux RE₁ ou RE₂, une trame de type CSMA/CD, à savoir, par exemple, TR₁₀₁ comprenant 8 buffers BF₁₀₁ à BF₁₀₈. On suppose en outre que le processeur MP₁ autorise, sur instruction de CNS, l'activation du canal C₁ en réception. La réception de la trame TR₁₀₁ se déroule selon les phases successives suivantes :

### Phase PH₁₁ (à partir de l'instant T₀) :

On suppose que la trame TR₁₀₁ provient du réseau RE₁ et est stockée par le contrôleur CONT₁ dans sa mémoire vive RAM₁. Le circuit intégré CE₁ de ce dernier prévient le second processeur MP₂ que cette trame est stockée dans la mémoire RAM₁. La tâche TC₁ correspondant au canal C₁, vient s'allouer en mémoire MV₁, un emplacement libre pour un descripteur de commande correspondant à la trame TR₁₀₁, soit COM₁₀₁, puis un emplacement libre pour un descripteur de buffer et met dans le descripteur de commande l'adresse de l'emplacement physique occupé par le premier descripteur de buffer, désigné par DB₁₀₁, puis s'alloue en MV₁ en tout 8 descripteurs de buffer, à savoir DB₁₀₁ (déjà nommé) à DB₁₀₈. Il convient ici de préciser que la mémoire MV₁ comprend une table de remplissage des divers emplacements mémoire qu'elle comporte. Cette table est accessible directement, aussi bien par MP₁ que MP₂. Ce dernier peut donc s'allouer des buffers, descripteurs de commande, descripteurs de buffer, en MV₁, sans en référer à MP₁. La tâche TC₁ chaîne entre eux ces descripteurs de buffer de la même manière qu'étaient chaînés entre eux DB₁, DB₂, etc.. Elle s'alloue également 8 buffers correspondant chacun à un descripteur de buffer, à savoir BF₁₀₁ à BF₁₀₈. On passe ensuite à la phase PH₁₂ (instant T₁).

### Phase PH₁₂:

La tâche TC₁ va chercher l'adresse du début de la trame TR₁₀₁ stockée dans la mémoire RAM₁ ainsi que sa longueur en octets dans les registres du circuit intégré CE₁ où ces informations sont inscrites lors de l'arrivée de ladite trame dans RAM₁. Ayant à sa disposition de telles informations, la tâche TC₁ est dès lors à même de découper la trame en un nombre déterminé de buffers, ici 8 dans l'exemple de réalisation choisi, à savoir BF₁₀₁ à BF₁₀₈. A chacun de ceux-ci, la tâche fait correspondre un descripteur de buffer DBA₁₀₁ à DBA₁₀₈ dans le registre du contrôleur DMA. Dans chacun de ces descripteurs, la tâche inscrit l'adresse occupée par le buffer correspondant dans la mémoire RAM₁, l'adresse que ce buffer doit occuper en mémoire MV₁, ainsi que sa longueur en octets. Dès que chacun des descripteurs de buffer (DBA₁₀₁ à DBA₁₀₈) est rempli par la tâche TC₁, on passe à la phase suivante PH₁₃.

### Phase PH₁₃: (à partir de l'instant T₂)

Les informations de la trame TR₁₀₁ sont transférées par la tâche TC₁ de la mémoire RAM₁ à la mémoire MV₁ dans les emplacements physiques de buffers BF₁₀₁ à BF₁₀₈. Lorsque le dernier buffer BF₁₀₈ est transféré dans l'emplacement physique qui lui correspond en mémoire MV₁, le contrôleur DMA émet une interruption de fin de réception ITFIN. TC₁ vient mettre dans le descripteur de commande COM₁₀₁ l'état de la trame reçue, c'est-à-dire indique si cette trame a été correctement reçue et présente ou non des erreurs, ainsi que le nombre total d'octets que celle-ci contient. On passe ensuite à la phase suivante PH₁₄ .

### Phase PH₁₄ :(à partir de l'instant T₃)

La tâche TC₁ met dans le FIFO FREC de la première mémoire MV₁ l'adresse du descripteur de commande COM₁₀₁ ainsi que le n° de canal correspondant à ce dernier, c'est-à-dire 1. On passe ensuite à la phase PH₁₅.

### Phase PH₁₅ : (à partir du temps T₄)

La tâche TC₁ libère les descripteurs de buffer qui avaient été préparés pour la réception de la trame TR₁₀₁ et qui n'ont pas été utilisés. Dès qu'ils sont libérés, le processeur MP₂ émet vers le premier processeur MP₁ une interruption CPUREQ à l'intant T₅ qui signifie que la totalité de la trame TR₁₀₁ est transférée dans MV₁. Cette dernière est alors à la disposition du logiciel CNS, pour son transfert vers le bus PSB. MP₁ va alors lire FREC et va ensuite lire le descripteur de commande correspondant COM₁₀₁ dans MV₁ et connaître la nature de l'opération à effectuer sur la trame reçue TR₁₀₁ (envoi via PSB vers ORD₁ ou ORD₂, ou CCS₁ etc..., ou demande de réémission de la trame au terminal émetteur, si cette dernière comporte des erreurs).

## Revendications

1. Contrôleur de communication (CCS) entre au moins un ordinateur (ORD₁, ORD₂) associé à un bus (PSB) et une pluralité de terminaux d'au moins un réseau local de type à méthode d'accès à test de porteuse et détection de collision appellé ci-dessous de type CSMA/CD, reliés entre eux par l'intermédiaire d'au moins une liaison comprenant au moins un canal de données (C₁, C₂) supporté par au moins un support de transmission (CX₁, CX₂, CX₃, CX₄, LE₂ - LR₂), comprenant:
- une unité de base (BA) reliée au bus (PSB), qui gère et effectue le transfert de trames (TR₁, TR₂, ..., TR₁₀₁) sur chacun des canaux de la liaison ou le canal de liaison (C₁, C₂),
- une unité périphérique (PER) reliée d'une part à l'unité de base (BA) et d'autre part au support de transmission, transmettant les données au réseau ou les recevant de celui-ci,
caractérisé en ce que l'unité de base (BA) comprend :
- un premier processeur de commande (MP₁) de transfert des trames depuis le bus (PSB) vers le réseau (RE₁-RE₂) et réciproquement, connecté au bus et associé à une première mémoire (MV₁) de stockage des trames avant leur transfert, qui gère le transfert de celles-ci vers les différents canaux ou le canal affectés à celles-ci,
- un second processeur (MP₂) communiquant avec le premier et réalisant, à l'émission, dans un premier temps, la division des trames provenant du bus en trames de type CSMA/CD, et effectuant, à l'émission et à la réception, le transfert de chacune des trames CSMA/CD ainsi constituées (TR₁, **...** TR₁₀₁), canal par canal ou sur le canal, depuis la première mémoire (MV₁) jusqu'à l'unité périphérique (PER), et réciproquement, et en ce que
l'unité périphérique (PER) comprend un contrôleur CSMA/CD (CONT) pour l'ensemble des canaux ou le canal, piloté par le second processeur (MP₂) et relié au support de transmission, comprenant au moins une mémoire de stockage de trames CSMA/CD (RAM₁, RAM₂), ces dernières étant stockées dans cette mémoire avant émission vers le réseau par le contrôleur CSMA/CD, ou avant leur transfert vers la première mémoire sous la conduite du second processeur (MP₂), en réception.

2. Contrôleur de communication (CCS) selon la revendication 1, caractérisé en ce que à l'émission, le second processeur (MP₂) transfère les données, sur chaque canal ou sur le canal paquet par paquet depuis la première mémoire (MV₁) jusqu'à la mémoire de stockage de trames (RAM₁, RAM₂).

3. Contrôleur de communication (CCS) selon l'une des revendications 1 ou 2, caractérisé en ce que le second processeur (MP₂) en réception, découpe chaque trame reçue (TR₁₀₁) en un nombre déterminé de paquets (BF₁₀₁ à BF₁₀₈) avant de transférer chacune des trames, paquet par paquet, canal par canal, depuis la mémoire de stockage de trame (RAM₁, RAM₂) jusqu'à la première mémoire MV₁.

4. Contrôleur de communication (CCS) selon l'une des revendications 1, 2, 3, caractérisé en ce que le premier processeur (MP₁) exécute son travail sur instruction d'un logiciel de communication (CNS) qui est inscrit, lors de l'initialisation du contrôleur (CCS) dans la première mémoire (MV₁).

5. Contrôleur de communication (CCS) selon la revendication 4, caractérisé en ce que, à l'émission, le premier processeur (MP₁) reçoit les trames venant du bus (PSB), les divise en une pluralité de paquets (BF₁, ..., BF₁₅) qu'il stocke de manière aléatoire dans la première mémoire (MV₁) en une pluralité d'emplacements physiques différents, avant que ces paquets ne soient transférés par le second processeur (MP₂) vers la mémoire de stockage et regroupés dans celle-ci par ce dernier, pour former au moins une trame de type CSMA/CD.

6. Contrôleur de communication (CCS) selon l'une des revendications 4, 5, caractérisé en ce que le second processeur (MP₂) exécute son travail sur instruction d'une architecture micrologicielle (AML) qui est inscrite lors de l'initialisation du contrôleur de communication dans une seconde mémoire (MV₂) associée au second processeur (MP₂).

7. Contrôleur de communication (CCS) selon la revendication 6, caractérisé en ce que l'architecture micrologicielle (AML) comprend un noyau (NY), une interface de communication (IC), permettant le dialogue entre le logiciel de communication (CNS) et l'architecture (AML), et une pluralité de modules micrologiciels, ou tâches (TC₀, TC₁, TC₂) en nombre au moins égal à celui des canaux, chaque canal étant associé à un module, lequel effectue le transfert des trames affectées à ce canal, depuis la première mémoire (MV₁) vers la partie périphérique (PER) et réciproquement, chaque module ou tâche étant indépendant des autres, son déroulement étant organisé en temps réel par le noyau (NY).

8. Contrôleur selon la revendication 7, caractérisé en ce que l'interface de communication (IC) communique, d'une part avec le noyau (NY), et d'autre part avec le logiciel de communication (CNS), acquitte les demandes provenant de ce dernier et les aiguille via le noyau (NY) vers les différentes tâches (TC₁, TC₂) correspondant aux différents canaux pour que ces dernières soient exécutées.

9. Contrôleur selon l'une des revendications 7 et 8, caractérisé en ce que les échanges entre l'unité de base (BA) et l'unité périphérique (PER) se définissent par des descripteurs de commande (COM₁, COM₂,... COM₁₀₁), correspondant à l'émission à une trame bus déterminée et en réception à une trame CSMA/CD déterminée et définissant les opérations devant être accomplies sur cette trame, laquelle est stockée dans la première mémoire (MV₁).

10. Contrôleur selon la revendication 9, caractérisé en ce que chaque descripteur de commande (COM₁, .... COM₁₀₁) pointe sur un descripteur de paquet (DB₁, ... DBₙ) définissant les caractéristiques du premier paquet (BF₁) de la trame associé au descripteur de commande (COM₁), chacun des paquets d'une trame étant associé à un descripteur de paquet, les descripteurs de paquet étant chaînés entre eux par des pointeurs de paquet (PCB₁, PCB₂,...) définissant chacun l'adresse logique du descripteur de paquet chaîné à celui comportant ce même pointeur, chacun des descripteurs de paquet pointant vers le paquet correspondant par un pointeur de buffer définissant l'adresse logique de ce paquet en première mémoire (MV₁), les emplacements physiques des descripteurs de paquet et des paquets étant définis par le premier processeur (MP₁).

## Patentansprüche

1. Steuervorrichtung (CCS) für die Kommunikation zwischen wenigstens einem Rechner (ORD₁, ORD₂), zu dem ein Bus (PSB) gehört, und mehreren Datenendgeräten wenigstens eines lokalen Netzes des Typs mit Mehrfachzugriff mit Trägerüberwachung und Kollisionserfassung, der im folgenden CSMA/CD-Typ genannt wird, wobei die Datenendgeräte untereinander über wenigstens eine Verbindung verbunden sind, die wenigstens einen Datenkanal (C₁, C₂) enthält, der durch wenigstens einen Übertragungsträger (CX₁, CX₂, CX₃, CX₄, LE₂ - LR₂) getragen wird, mit:
- einer Basiseinheit (BA), die mit dem Bus (PSB) verbunden ist und die Rahmenübertragung (TR₁, TR₂, ..., TR₁₀₁) in jedem der Kanäle der Verbindung oder in dem Verbindungskanal (C₁, C₂) leitet und ausführt,
- einer Peripherieeinheit (PER), die einerseits mit der Basiseinheit (BA) und andererseits mit dem Übertragungsträger verbunden ist und die Daten zum Netz überträgt oder von diesem empfängt,
dadurch gekennzeichnet, daß die Basiseinheit (BA) enthält:
- einen ersten Steuerprozessor (MP₁) für die Übertragung der Rahmen vom Bus (PSB) zum Netz (RE₁, RE₂) und umgekehrt, der an den Bus angeschlossen ist und zu dem ein erster Speicher (MV₁) für die Speicherung der Rahmen vor ihrer Übertragung gehört, wobei der Prozessor die Übertragung der Rahmen an die verschiedenen Kanäle oder den Kanal, die diesen zugewiesen sind, leitet,
- einen zweiten Prozessor (MP₂), der mit dem ersten in Verbindung steht und beim Senden zu einer ersten Zeit die Unterteilung der vom Bus kommenden Rahmen in Rahmen des CSMA/CD-Typs verwirklicht und beim Senden und beim Empfangen die Übertragung jedes der so gebildeten CSMA/CD-Rahmen (TR₁, ..., TR₁₀₁) Kanal für Kanal oder in dem Kanal vom ersten Speicher (MV₁) bis zur Peripherieeinheit (PER) bzw. umgekehrt ausführt,
und dadurch, daß
die Peripherieeinheit (PER) eine CSMA/CD-Steuereinrichtung (CONT) für sämtliche Kanäle oder für den Kanal enthält, die vom zweiten Prozessor (MP₂) gesteuert wird, mit dem Übertragungsträger verbunden ist und wenigstens einen Speicher für die Speicherung von CSMA/CD-Rahmen (RAM₁, RAM₂) enthält, wobei diese letzteren in diesem Speicher gespeichert werden, bevor sie von der CSMA/CD-Steuereinrichtung zum Netz gesendet werden oder bevor sie beim Empfang unter der Leitung des zweiten Prozessors (MP₂) zum ersten Speicher übertragen werden.

2. Kommunikationssteuereinrichtung (CCS) nach Anspruch 1, dadurch gekennzeichnet, daß beim Senden der zweite Prozessor (MP₂) die Daten in jedem Kanal oder in dem Kanal Paket für Paket vom ersten Speicher (MV₁) bis zum Speicher (RAM₁, RAM₂) für die Rahmenspeicherung überträgt.

3. Kommunikationssteuereinrichtung (CCS) nach einem der Ansprüche 1 oder 2, dadurch gekennzeichnet, daß der zweite Prozessor (MP₂) beim Empfang jeden empfangenen Rahmen (TR₁₀₁) in eine bestimmte Anzahl von Paketen (BF₁₀₁ bis BF₁₀₈) zerlegt, bevor er jeden der Rahmen Paket für Paket und Kanal für Kanal vom Speicher (RAM₁, RAM₂) für die Rahmenspeicherung bis zum ersten Speicher MV₁ überträgt.

4. Kommunikationssteuereinrichtung (CCS) nach einem der Ansprüche 1, 2, 3, dadurch gekennzeichnet, daß der erste Prozessor (MP₁) seine Arbeit aufgrund des Befehls einer Kommunikationssoftware (CFS) ausführt, die bei der Initialisierung der Steuereinrichtung (CCS) in den ersten Speicher (MV₁) geschrieben wird.

5. Kommunikationssteuereinrichtung (CCS) nach Anspruch 4, dadurch gekennzeichnet, daß beim Senden der erste Prozessor (MP₁) die Rahmen, die vom Bus (PSB) kommen, empfängt, sie in mehrere Pakete (BF_{1,} ..., BF₁₅) unterteilt, die er auf zufällige Weise im ersten Speicher (MV₁) an mehreren physikalisch unterschiedlichen Plätzen speichert, bevor diese Pakete vom zweiten Prozessor (MP₂) zum Rahmenspeicher übertragen und in diesem von diesem letzteren umgeordnet werden, um wenigstens einen Rahmen des CSMA/CD-Typs zu bilden.

6. Kommunikationssteuereinrichtung (CCS) nach einem der Ansprüche 4, 5, dadurch gekennzeichnet, daß der zweite Prozessor (MP₂) seine Arbeit aufgrund eines Befehls einer Mikrosoftware-Architektur (AML) ausführt, die beim Initialisieren der Kommunikationssteuereinrichtung in einen zweiten Speicher (MV₂), der zum zweiten Prozessor (MP₂) gehört, geschrieben wird.

7. Kommunikationssteuereinrichtung (CCS) nach Anspruch 6, dadurch gekennzeichnet, daß die Mikrosoftware-Architektur (AML) einen Kern (NY), eine Kommunikationsschnittstelle (IC), die den Dialog zwischen der Kommunikationssoftware (CNS) und der Architektur (AML) ermöglicht, sowie mehrere MikrosoftwareModule oder Tasks (TC₀, TC₁, TC₂) in einer Anzahl, die wenigstens gleich derjenigen der Kanäle ist, enthält, wobei zu jedem Kanal ein Modul gehört, der die Übertragung der diesem Kanal zugewiesenen Rahmen vom ersten Speicher (MV₁) zum Peripherieteil (PER) und umgekehrt ausführt, wobei jeder Modul oder jede Task unabhängig von den anderen ist, wobei sein/ihr Ablauf in Echtzeit vom Kern (NY) organisiert wird.

8. Steuereinrichtung nach Anspruch 7, dadurch gekennzeichnet, daß die Kommunikationsschnittstelle (IC) einerseits mit dem Kern (NY) und andererseits mit der Kommunikationssoftware (CNS) kommuniziert, die von dieser letzteren kommenden Anforderungen bestätigt und sie über den Kern (NY) zu den verschiedenen Tasks (TC₁, TC₂), die den verschiedenen Kanälen entsprechen, leitet, damit diese Tasks ausgeführt werden.

9. Steuereinrichtung nach einem der Ansprüche 7 und 8, dadurch gekennzeichnet, daß der jeweilige Austausch zwischen der Basiseinheit (BA) und der Peripherieeinheit (PER) durch Befehlsdeskriptoren (COM₁, COM₂, **...,** COM₁₀₁) definiert ist, die beim Senden einem bestimmten Busrahmen und beim Empfangen einem bestimmten CSMA/CD-Rahmen entsprechen und die Operationen definieren, die an diesem Rahmen, der im ersten Speicher (MV₁) gespeichert ist, vorgenommen werden müssen.

10. Steuereinrichtung nach Anspruch 9, dadurch gekennzeichnet, daß jeder Befehlsdeskriptor (COM_{1,} ..., COM₁₀₁) auf einen Paketdeskriptor (DB₁, ..., Dbₙ) zeigt, der die Eigenschaften des ersten Pakets (BF₁) des zum Befehlsdeskriptor (COM₁) gehörenden Rahmens definiert, wobei zu jedem der Pakete eines Rahmens ein Paketdeskriptor gehört, wobei die Paketdeskriptoren durch Paketzeiger (PCB₁, PCB₂, ...) miteinander verknüpft sind, die jeweils die logische Adresse desjenigen Paketdeskriptors definieren, der mit dem diesen Zeiger enthaltenden Paketdeskriptor verknüpft ist, wobei jeder der Paketdeskriptoren auf das entsprechende Paket durch einen Pufferzeiger zeigt, der die logische Adresse dieses Pakets im ersten Speicher (MV₁) definiert, wobei die physikalischen Plätze der Paketdeskriptoren und der Pakete durch den ersten Prozessor (MP₁) definiert werden.

## Claims

1. A communications controller (CCS) between at least one computer (ORD₁, ORD₂) associated with a bus (PSB) and a plurality of terminals of at least one local network of the type known as carrier sense multiple access with collision detection, hereinafter CSMA/CD, connected together via at least one link comprising at least one data channel (C₁, C₂) supported by at least one transmission medium (CX₁, CX₂, CX₃, CX₄, LE₂ - LR₂), comprising:
- a base unit (BA) connected to the bus (PSB), which manages and transfers frames (TR₁, TR₂, ..., TR₁₀₁) over each of the channels of the link or the linking channel (C₁, C₂),
- a peripheral unit (PER) connected on the one hand to the base unit (BA) and on the other hand to the transmission medium, transmitting the data to the network or receiving them from it,
characterised in that the base unit (BA) comprises:
- a first command processor (MP₁) for transferring frames from the bus (PSB) to the network (RE₁-RE₂) and vice versa, connected to the bus and associated with a first memory (MV₁) for storing the frames before they are transferred, which manages the transfer of said frames to the various channels, or the channel, assigned thereto,
- a second processor (MP₂) communicating with the first and initially, on transmission, dividing up the frames coming from the bus into CSMA/CD-type frames and, on transmission and reception, transferring each of the CSMA/CD frames thus constituted (TR₁, ... TR₁₀₁), channel by channel or over the channel, from the first memory (MV₁) to the peripheral unit (PER) and vice versa, and in that the peripheral unit (PER) comprises a CSMA/CD controller (CONT) for all the channels or the channel, driven by the second processor (MP₂) and connected to the transmission medium, comprising at least one memory for storing CSMA/CD frames (RAM₁, RAM₂), the latter being stored in this memory before transmission to the network by the CSMA/CD controller, or before being transferred to the first memory under the control of the second processor (MP₂), on reception.

2. A communications controller (CCS) according to Claim 1 characterised in that, on transmission, the second processor (MP₂) transfers the data over each channel or over the channel, packet by packet, from the first memory (MV₁) to the frame-storage memory (RAM₁, RAM₂).

3. A communications controller (CCS) according to one of Claims 1 or 2, characterised in that the second processor (MP₂), on reception, divides each frame received (TR₁₀₁) into a predetermined number of packets (BF₁₀₁ to BF₁₀₈) before transferring each of the frames, packet by packet, channel by channel, from the frame-storage memory (RAM₁, RAM₂) to the first memory MV₁.

4. A communications controller (CCS) according to one of Claims 1, 2, 3, characterised in that the first processor (MP₁) performs its work on the instruction of a piece of communications software (CNS) that is written, on initialisation of the controller (CCS), to the first memory (MV₁).

5. A communications controller (CCS) according to Claim 4 characterised in that, on transmission, the first processor (MP₁) receives the frames coming from the bus (PSB), divides them into a plurality of packets (BF₁, ..., BF₁₅) that it stores at random in the first memory (MV₁), in a plurality of different physical locations, before these packets are transferred by the second processor (MP₂) to the storage memory and grouped therein by said second processor, to form at least one CSMA/CD-type frame.

6. A communications controller (CCS) according to one of Claims 4, 5, characterised in that the second processor (MP₂) performs its work on the instruction of a firmware architecture (AML) that is written, on the initialisation of the communications controller, to a second memory (MV₂) associated with the second processor (MP₂).

7. A communications controller (CCS) according to Claim 6, characterised in that the firmware architecture (AML) comprises a core (NY), a communications interface (IC), allowing dialogue between the communications software (CNS) and the architecture (AML), and a plurality of firmware modules, or tasks (TC₀, TC₁, TC₂) numbering at least as many as there are channels, each channel being associated with a module, which transfers the frames assigned to that channel, from the first memory (MV₁) to the peripheral portion (PER) and vice versa, each module or task being independent of the others, its running being organised in real time by the core (NY).

8. A controller according to Claim 7, characterised in that the communications interface (IC) communicates on the one hand with the core (NY) and on the other hand with the communications software (CNS), processes requests from the latter and routes them via the core (NY) to the various tasks (TC₁, TC₂) corresponding to the various channels so that said tasks can be performed.

9. A controller according to one of Claims 7 and 8, characterised in that exchanges between the base unit (BA) and the peripheral unit (PER) are defined by command descriptors (COM₁, COM₂, ..., COM₁₀₁) corresponding, on transmission, to a given bus frame and, on reception, to a given CSMA/CD frame and defining the operations that have to be performed on that frame, which is stored in the first memory (MV₁).

10. A controller according to Claim 9, characterised in that each command descriptor (COM₁, ..., COM₁₀₁) is addressed to a packet descriptor (DB₁, ..., DBₙ) defining the characteristics of the first packet (BF₁) of the frame associated with the command descriptor (COM₁), each of the packets of a frame being associated with a packet descriptor, the packet descriptors being chained together by packet pointers (PCB₁, PCB₂) each defining the logical address of the packet descriptor chained to the one comprising the same pointer, each of the packet descriptors addressed to the corresponding packet by a buffer pointer defining the logical address of that packet in the first memory (MV₁), the physical locations of the packet descriptors and the packets being defined by the first processor (MP₁).
